# EUROPÄISCHE PATENTANMELDUNG

(11) **EP 0 715 989 A1**
(43) Veröffentlichungstag der Anmeldung: **12.06.1996**
(21) Anmeldenummer: 95810707.0
(22) Anmeldetag: 09.11.1995
(51) Int. Cl.: B60R 9/04, F16B 23/00

(54) **Fuss zur lösbaren Befestigung einer Dachreling**

(30) Priorität: 08.12.1994 CH 3717/94
(71) Anmelder: Alusuisse-Lonza Services AG, CH-8212 Neuhausen am Rheinfall (CH)
(72) Erfinder: Herz, Erich, D-78224 Singen (DE); Roczyn, Hans-Gerd, D-78224 Singen (DE); Erling, Jürgen, D-78239 Rielasingen (DE)

(57) **Zusammenfassung**

Bei einem Fuss (12) zur lösbaren Befestigung einer Dachreling (10) an einem Fahrzeug, insbesondere an einem Personenkraftwagen, Transporter oder dgl. Nutzfahrzeug, ist ein in einer Bohrung (36) im Fuss (12) geführter Gewindebolzen (20) einends mit einem in ein im Fahrzeuginnern festgelegten Gegengewinde (29) einschraubbaren Gewindeteil (24) versehen. An seinem anderen Ende ist eine innerhalb eines senkrecht zur Achse (x) der Bohrung (36) angeordneten Langloches (38) liegende Spannmutter (30) festgelegt. Die Spannmutter (30) weist an ihrem äusseren Umfang (32) Zähne (34) auf, und zwischen dem äusseren Umfang (32) der Spannmutter (30) und der Innenwand des Langloches (38) ist eine Spannschraube (42) mit einem zur Ermöglichung einer Drehbewegung der Spannmutter (30) auf die Dimension der Zähne (34) abgestimmten Schraubgewinde (44) einsetzbar.

## Beschreibung

Die Erfindung betrifft einen Fuss zur lösbaren Befestigung einer Dachreling an einem Fahrzeug, insbesondere an einem Personenkraftwagen, Transporter oder dgl. Nutzfahrzeug, durch eine Schraubverbindung zwischen dem Fuss und einem im Fahrzeuginnern festgelegten Gegengewinde.

Die Befestigung der Dachreling an einem PKW erfolgt am fertig montierten Wagen. Damit die Montage von einer einzigen Person durchgeführt werden kann, muss sie von der Aussenseite des Wagens her möglich sein. Bei einer bekannten Befestigungsart ist der Fuss zweiteilig ausgebildet, wobei der untere Teil mittels einer Schraube durch vorgängig mit einer Lehre in die Dachhaut gebohrte Löcher an einem Gegengewinde im Fahrzeuginnern festgelegt ist. Der zweite Teil des Fusses dient als Abdeckung und wird auf den ersten Teil aufgeklipst bzw. mit einer zweiten Schraube befestigt. Der zweiteilige Fuss ist aus ästhetischen Gründen nicht wünschenswert und durch die einfache Zugänglichkeit der Schraube ist die Dachreling auch nicht diebstahlsicher.

Bei einer anderen Ausführungsform wird der Fuss auf einen vorgängig befestigten, mit einer Kerbe versehenen Bolzen aufgesetzt. Die Fixierung des Fusses erfolgt über eine Gewindebohrung, in welche eine mit der Kerbe zusammenwirkende Madenschraube eingesetzt wird. Infolge der leichten Zugänglichkeit der Schraube ist auch diese Variante nicht diebstahlsicher.

Angesichts dieser Gegebenheiten hat sich der Erfinder die Aufgabe gestellt, einen Fuss für eine Dachreling der eingangs erwähnten Art derart auszugestalten, dass eine einfache Montage von der Aussenseite des Wagen her möglich ist und der gleichzeitig eine höhere Diebstahlsicherheit gewährleistet.

Zur erfindungsgemässen Lösung der Aufgabe führt, dass ein in einer Bohrung im Fuss geführter Gewindebolzen einends mit einem in das Gegengewinde einschraubbaren Gewindeteil versehen ist und an seinem anderen Ende eine innerhalb eines senkrecht zur Achse der Bohrung angeordneten Langloches liegende Spannmutter festgelegt ist, wobei die Spannmutter an ihrem äusseren Umfang Zähne aufweist und zwischen dem äusseren Umfang der Spannmutter und der Innenwand des Langlochs eine Spannschraube mit einem zur Ermöglichung einer Drehbewegung der Spannmutter auf die Dimension der Zähne abgestimmten Schraubgewinde einsetzbar ist.

Die Erfindung weiterbildende Ausführungsformen sind Gegenstand von abhängigen Patentansprüchen.

Bei der erfindungsgemässen Befestigung des Fusses erfolgt die Verschraubung mittels einer Spannschraube, die nach der Fixierung des Fusses auf dem Wagendach wieder entfernt wird. Eine Demontage ist somit nur möglich, wenn die zugehörige Spannschraube vorhanden ist. Dadurch ist die Diebstahlsicherheit gegenüber den gewöhnlichen Schraubverbindungen stark erhöht.

Zur einfachen Montage ist der Gewindebolzen bevorzugt mit einem zweiten Gewindeteil versehen, wobei der Gewindebolzen über diesen zweiten Gewindeteil mit der Spannmutter verschraubt ist.

Die Breite des Langloches ist zweckmässigerweise derart festgelegt, dasss die Spannschraube beidseits der Spannmutter einsetzbar ist. Dies ermöglicht durch die Wahl des Einsatzortes der Spannmutter neben der Montage auch die einfache Demontage der Dachreling.

Die Höhe des Langloches wird bevorzugt so gewählt, dass sie unter Berücksichtigung eines minimalen Spiels etwa der Höhe der Spannschraube entspricht. Ebenso entspricht der Innendurchmesser der Bohrung unter Berücksichtigung eines minimalen Spiels etwa dem Durchmesser des Gewindebolzens.

Zweckmässigerweise sind die Zähne am äussern Umfang der Spannmutter als parallel zur Drehachse der Spannmutter angeordnete Stege ausgebildet und die Spannschraube liegt in eingesetzter Lage dem als Gegenlager dienenden Boden des Langloches auf.

Eine kostengünstige Herstellung des Fusses kann dadurch erreicht werden, wenn der Fuss als Schmiedeteil aus Aluminium geformt wird. Der Fuss kann jedoch auch im Kokillengiess-, Druckgiess-, Vakuumdruckgiess- oder einem anderen Giessverfahren hergestellt werden. Geeignete Herstellungsverfahren sind auch Thixo-Casting und Thixo-Schmieden. Als Werkstoffe können auch Magnesium, Zink, Kunststoffe, ggf. mit Metalloder Glasfaserverstärkung, sowie weitere Materialien eingesetzt werden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- - Fig. 1: eine Seitenansicht eines Fusses einer Dachreling;
- - Fig. 2: eine Draufsicht auf den teilweise entlang der Linie I-I geschnittenen Fuss von Fig. 1 in vergrösserter Darstellung;
- - Fig. 3: einen Querschnitt durch den Fuss von Fig. 1 entlang deren Linie II-II.

Eine aus Gründen der besseren Uebersicht nicht näher dargestellte Dachreling 10 für einen Personenkraftwagen weist einen Fuss 12 auf, der über eine zwischengeordnete Dichtung 18 einer äusseren Dachhaut 14 aufliegt. Die Befestigung des Fusses 12 auf dem Dach des Personenkraftwagens erfolgt über einen im Innern des Fusses 12 verankerten Gewindebolzen 20, der über ein erstes Gewindeteil 24 in das Innengewinde 29 einer an einer inneren Dachhaut bzw. Dachverstärkung 16 festgelegten Mutter 28 eingeschraubt ist. Da die an der Dachverstärkung 16 festgelegte Mutter 28 von aussen nicht sichtbar ist, ist der Gewindebolzen 20 zur erleichterten Einführung in die Mutter 28 mit einer kegelförmigen Spitze 22 versehen.

Die Verankerung des Gewindebolzens 20 im Fuss 12 erfolgt über eine Spannmutter 30, in deren Innengewinde 31 der Gewindebolzen 20 über einen zweiten Gewindeteil 26 eingeschraubt ist.

Der Gewindebolzen 20 ist im Fuss 12 in einer Bohrung 36 geführt, deren Innendurchmesser e nur wenig grösser ist als der Durchmesser des Gewindebolzens 20. Senkrecht zur Achse x der Bohrung 36 ist ein Langloch 38 mit seiner Achse y derart angeordnet, dass das Langloch 38 die Bohrung 36 schneidet. Im Langloch 38 befindet sich die als Verankerungsteil wirkende Spannmutter 30, deren Dimension in Achsenrichtung x nur wenig geringer ist als die Höhe h des Langlochs 38. Die Spannmutter 30 ist an ihrem äusseren kreisrunden Umfang 32 mit Zähnen 34 in der Form von zur Achse x parallelen Stegen versehen. Die Breite b des Langlochs 38 ist so gewählt, dass bei eingesetzter Spannmutter 30 zwischen deren äusserem Umfang 32 und der Innenwandung des Langlochs 38 beidseitig und symmetrisch zueinander liegend je ein Zwischenraum 52, 54 zum Einsetzen einer Spannschraube 42 verbleibt. Diese Spannschraube 42 ist mit einem auf die Zähne 34 der Spannmutter 30 abgestimmten Schraubgewinde versehen.

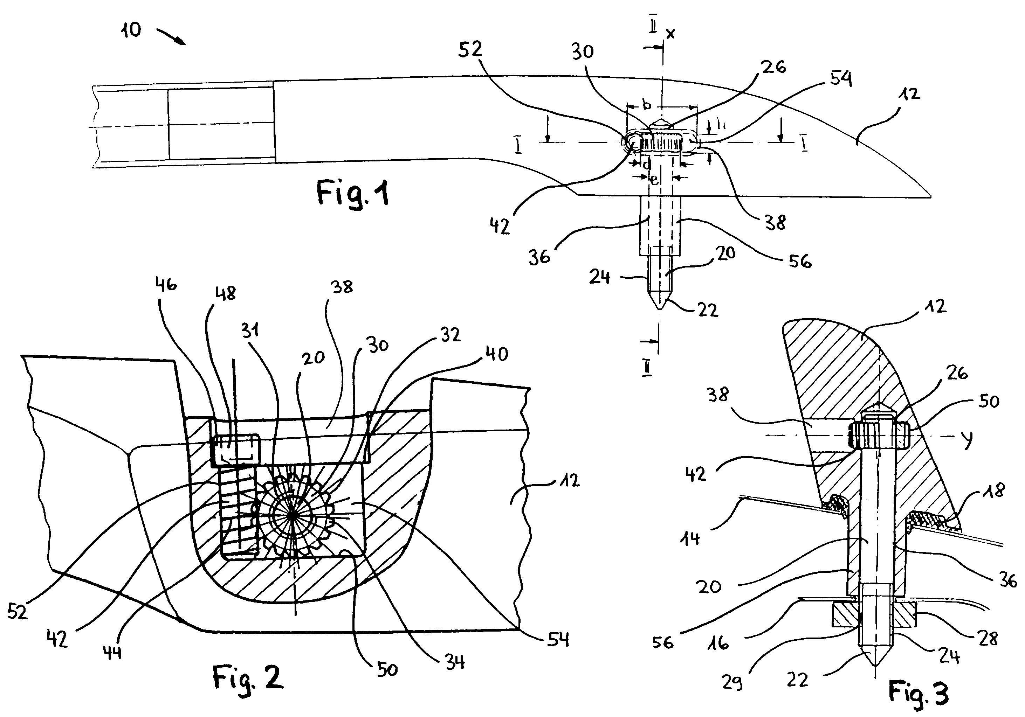

Die in Fig. 2 gezeigte Spannschraube 42 weist einen Kopf 46 mit einem Innensechskant 48 auf. Der gegenüber dem Schraubgewinde 44 grössere Durchmesser des Kopfes 46 macht eine Verbreiterung des Langlochs 38 in dessen Oeffnungsbereich erforderlich, wodurch sich die in Fig. 2 sichtbare Verjüngungsstufe 40 ergibt. Für den Fall, dass eine Spannschraube 42 ohne Kopf 46 -- z.B. eine Madenschraube -- oder eine Verlängerung ausserhalb des Langloches verwendet wird, kann die Verjüngungsstufe 40 entfallen.

Nachfolgend wird die Montage des Fusses 12 der Dachreling 10 auf dem Dach eines Personenkraftwagens näher beschrieben.

Es sind jedoch auch andere Endausbildungen der Spannschraube möglich, wie z.B. ein Schlitz bzw. Kreuzschlitz. Für die maschinelle Montage kann anstelle der Spannschraube 42 auch ein Gewindeteil dienen, welches einer beweglichen Welle aufgesetzt ist.

Als erstes wird die Spannmutter 30 in das Langloch 38 geschoben, anschliessend der Gewindebolzen 20 durch die Bohrung 36 an die Spannmutter 30 herangeführt und über das zweite Gewindeteil 36 des Gewindebolzens 20 und das Innengewinde 31 mit der Spannmutter 30 verschraubt. Danach wird der Fuss 12, der ggf. einen die äussere Dachhaut 14 durchdringenden und in eingebautem Zustand der Dachverstärkung 16 aufliegenden Stützzapfen 56 aufweist, derart auf die äussere Dachhaut 14 aufgesetzt, dass der Gewindebolzen 20 mit seiner als Einführhilfe ausgebildeten kegelförmigen Spitze 22 in die an der inneren Dachhaut 16 festgelegte Mutter 28 eindringt. Danach wird die ggf. schon vorher in den Zwischenraum 52 eingesetzte Spannschraube mittels eines Schraubenziehers oder eines Steckschlüssels gedreht. Da die Spannschraube 42 sich mit ihrem freien Ende am Boden 50 des Langlochs 38 abstützt, erfolgt durch die Drehung der Spannschraube 42 eine Drehbewegung der Spannmutter 30 und damit des mit ihr fest verschraubten Gewindebolzens 20, wodurch dieser in die an der Dachverstärkung 16 festgelegte Mutter 28 eingeschraubt wird. Die Uebertragung der Drehbewegung von der Spannschraube 42 auf die Spannmutter 30 bzw. den Gewindebolzen 20 erfolgt somit in der Art eines Schneckengetriebes.

Nachdem der Fuss auf die oben beschriebene Weise fest auf dem Dach des Personenkraftwagens montiert worden ist, wird die Spannschraube 42 aus dem Zwischenraum 52 herausgedreht und die Oeffnung des Langlochs 38 ebenfalls mit einem in der Zeichnung nicht dargestellten Zapfen bzw. Deckel abgedeckt. Die Demontage der Dachreling 10 erfolgt auf einfache Weise dadurch, dass die Spannschraube 42 zunächst in den zweiten Zwischenraum 54 eingeschraubt und danach solange weiter gedreht wird, bis der Gewindebolzen 20, der jetzt eine der Einschraubbewegung entgegengesetzte Drehbewegung ausführt, wiederum aus der Mutter 28 austritt.

## Patentansprüche

1. Fuss zur lösbaren Befestigung einer Dachreling an einem Fahrzeug, insbesondere an einem Personenkraftwagen, Tranporter oder dgl. Nutzfahrzeug, durch eine Schraubverbindung zwischen dem Fuss und einem im Fahrzeuginnern festgelegten Gegengewinde,
dadurch gekennzeichnet,
dass ein in einer Bohrung (36) im Fuss (12) geführter Gewindebolzen (20) einends mit einem in das Gegengewinde (29) einschraubbaren Gewindeteil (24) versehen ist und an seinem anderen Ende eine innerhalb eines senkrecht zur Achse (x) der Bohrung (36) angeordneten Langloches (38) liegende Spannmutter (30) festgelegt ist, wobei die Spannmutter (30) an ihrem äusseren Umfang (32) Zähne (34) aufweist und zwischen dem äusseren Umfang (32) der Spannmutter (30) und der Innenwand des Langloches (38) eine Spannschraube (42) mit einem zur Ermöglichung einer Drehbewegung der Spannmutter (30) auf die Dimension der Zähne (34) abgestimmten Schraubgewinde (44) einsetzbar ist.

2. Fuss nach Anspruch 1, dadurch gekennzeichnet, dass der Gewindebolzen (20) mit einem zweiten Gewindeteil (26) versehen ist und der Gewindebolzen (20) über diesen zweiten Gewindeteil (26) mit der Spannmutter (30) verschraubt ist.

3. Fuss nach Anspruch 1 oder 2, dadurch gekennzeichnet, dass die Breite (b) des Langsloches (38) derart festgelegt ist, dass die Spannschraube (42) beidseits der Spannmutter (30) einsetzbar ist.

4. Fuss nach einem der Ansprüche 1 bis 3, dadurch gekennzeichnet, dass die Höhe (h) des Langloches (38) unter Berücksichtigung eines minimalen Spiels etwa der Höhe der Spannschraube (30) entspricht.

5. Fuss nach einem der Ansprüche 1 bis 4, dadurch gekennzeichnet, dass der Innendurchmesser (e) der Bohrung (36) unter Berücksichtigung eines minimalen Spiels etwa dem Durchmesser des Gewindebolzens (20) entspricht.

6. Fuss nach einem der Ansprüche 1 bis 5, dadurch gekennzeichnet, dass die Zähne (34) am äusseren Umfang (32) der Spannmutter (30) als parallel zur Drehachse der Spannmutter (30) angeordnete Stege ausgebildet sind.

7. Fuss nach einem der Ansprüche 1 bis 6, dadurch gekennzeichnet, dass die Spannschraube (42) in eingesetzter Lage dem als Gegenlager dienenden Boden (50) des Langloches (38) als Gegenlager aufliegt.

8. Fuss nach einem der Ansprüche 1 bis 7, dadurch gekennzeichnet, dass er als Schmiede- bzw. Thixoschmiede-, Druckguss-, Vakuumdruckguss-, Kokillenguss- oder Thixocastingteil aus Aluminium, Magnesium, Zink oder Kunststoff, ggf. mit Metall- oder Glasfaserverstärkung, geformt ist.
